# EUROPÄISCHE PATENTANMELDUNG

(11) **EP 1 090 834 A2**
(43) Veröffentlichungstag der Anmeldung: **11.04.2001**
(21) Anmeldenummer: 00119875.3
(22) Anmeldetag: 13.09.2000
(51) Int. Cl.: B64C 1/14

(54) **Vorrichtung zum Bewegen einer Flugzeugtür**

(30) Priorität: 08.10.1999 DE 19948844
(71) Anmelder: EADS Airbus GmbH, 21129 Hamburg (DE)
(72) Erfinder: Philipp, Ralf, Dipl.-Ing., 21698 Harsefeld (DE); Lessat, Wolfgang, Dipl.-Ing., 21149 Hamburg (DE); Kallies, Günter, Dipl.-Ing., 22523 Hamburg (DE)
(74) Vertreter: Hansmann, Dierk, Dipl.-Ing.

(57) **Zusammenfassung**

Vorrichtung zum Bewegen einer Flugzeugtür, die zum Öffnen nach außen geschwenkt und zum Schließen in die Rumpfstruktur eingeschwenkt wird.

Vorteile: Reduzierung der Kinematikbauelemente innerhalb der Tür, der Herstellkosten, der Wartungsarbeiten sowie des Gewichts. Es ist vorgesehen,
- daß in der Flugzeugkabine seitlich neben der Tür ein Türbetätigungshebel angeordnet ist, der bei Betätigung eine Sicherungswelle einer Türverriegelungseinrichtung entsichert bzw. sichert und der im Anschluß an den mechanischen Verriegelungs-/Entriegelungsvorgang als elektrischer Schalter für eine Steuerungs- und Überwachungseinheit dient, und
- daß die Steuerungs- und Überwachungseinheit nacheinander elektrische Stellsignale für einen ersten Elektromotor zur mechanischen Entriegelung bzw. Verriegelung der Anhebe- und Verriegelungswelle der Türverriegelungseinrichtung und zum Anheben bzw. Absenken der Tür sowie für einen zweiten Elektromotor bereitstellt, der nach Abschluß des Anhebevorganges die Tür parallel zum Rumpf nach außen schwenkt und in ihrer geöffneten Endposition hält bzw. der zum Schließen der Tür diese in die Rumpfstruktur einschwenkt.

## Beschreibung

Die Erfindung betrifft eine Kinematik für eine Flugzeugtür, die zum Öffnen nach außen geschwenkt und zum Schließen in die Rumpfstruktur eingeschwenkt und dann in eine formschlüssige Position gegenüber der Rumpfstruktur gebracht wird, wobei die Übertragung der aus dem Kabineninnendruck resultierenden Kräfte über Anlagebeschläge oder über Knebel erfolgt und die Tür während des Schwenkvorganges durch einen Traglenker mit einem rumpfnahen und einem türnahen Ende gehalten wird, und wobei zur Durchführung der Funktionen des Entriegelns, Öffnens und Ausschwenkens der Tür sowie für die umgekehrten Funktionen programmsteuerbare Elektromotore vorgesehen sind.

Eine Kinematik der eingangs beschriebenen Art ist aus der DE 40 22 067 C2 bekannt. Bei dieser vorbekannten Kinematik sind für die Funktionen des Einschwenkens, Schließens und Verriegelns der Tür und für die umgekehrten Funktionen jeweils einzelne als programmsteuerbare Schrittmotore ausgebildete Elektromotore vorgesehen. Der hierbei erforderliche technische Aufwand ist verhältnismäßig groß.

Der Erfindung liegt nun die Aufgabe zugrunde, eine Kinematik der eingangs genannten Art zu schaffen, bei der eine deutliche Reduzierung der Kinematikbauelemente innerhalb der Passagiertür und damit der Herstellkosten, der planbaren Wartungsarbeiten sowie eine deutliche Gewichtseinsparung erreicht wird.

Die Aufgabe wird erfindungsgemäß dadurch gelöst,
- daß in der Flugzeugkabine seitlich neben der Tür ein Türbetätigungshebel angeordnet ist, der bei Betätigung eine Sicherungswelle einer Türverriegelungseinrichtung entsichert bzw. sichert (mechanischer Schaltbereich) und der im Anschluß an den mechanischen Verriegelungs-/Entriegelungsvorgang als elektrischer Schalter für eine Steuerungs- und überwachungseinheit dient, und
- daß die Steuerungs- und überwachungseinheit nacheinander elektrische Stellsignale für einen ersten Elektromotor zur mechanischen Entriegelung bzw. Verriegelung der Anhebe- und Verriegelungswelle der Türverriegelungseinrichtung und zum Anheben bzw. Absenken der Tür sowie für einen zweiten Elektromotor bereitstellt, der nach Abschluß des Anhebevorganges die Tür parallel zum Rumpf nach außen schwenkt und in ihrer geöffneten Endposition hält bzw. der zum Schließen der Tür diese in die Rumpfstruktur einschwenkt.

Ausgestaltungen der Erfindung sind darin zu sehen, daß die Steuerungs- und Überwachungseinheit neben einer Überwachung und Steuerung aller Türoperationen den jeweiligen Türstatus überwacht bzw. daß von der Steuerungs- und Überwachungseinheit alle die jeweiligen Türoperationen bzw. den jeweiligen Türstatus enthaltenden Informationen an von dem Flugpersonal bedienbare Anzeigegeräte weitergeleitet werden.

Zwei weitere erfindungsgemäße Weiterbildungen bestehen darin, daß der zweite Elektromoter die Tür in Flugrichtung nach außen schwenkt bzw. entgegen der Flugrichtung in die Rumpfstruktur einschwenkt sowie daß bei Ausfall des elektrischen Bordnetzes eine reibungslose Funktion der Kinematik durch eine lokale Notstromversorgung sichergestellt ist.

Vorteile der Erfindung liegen in einer erheblichen Verbesserung des Bedienkomforts der Passagiertür und der operationellen Sicherheit sowie in einer Erleichterung bei der Umsetzung der Sicherheitsanforderungen an die Passagiertür.

In der Zeichnung ist ein Ausführungsbeispiel nach der Erfindung dargestellt, und zwar zeigt:
- Fig. 1: eine Übersichtsdarstellung einer Flugzeug-Passiertür mit zugehöriger Kinematik und mit einem von Hand zu bedienenden Türbetätigungshebel, und
- Fig. 2: eine Seitenansicht des Türbetätigungshebels gemäß Schnitt A-A aus Figur 1.

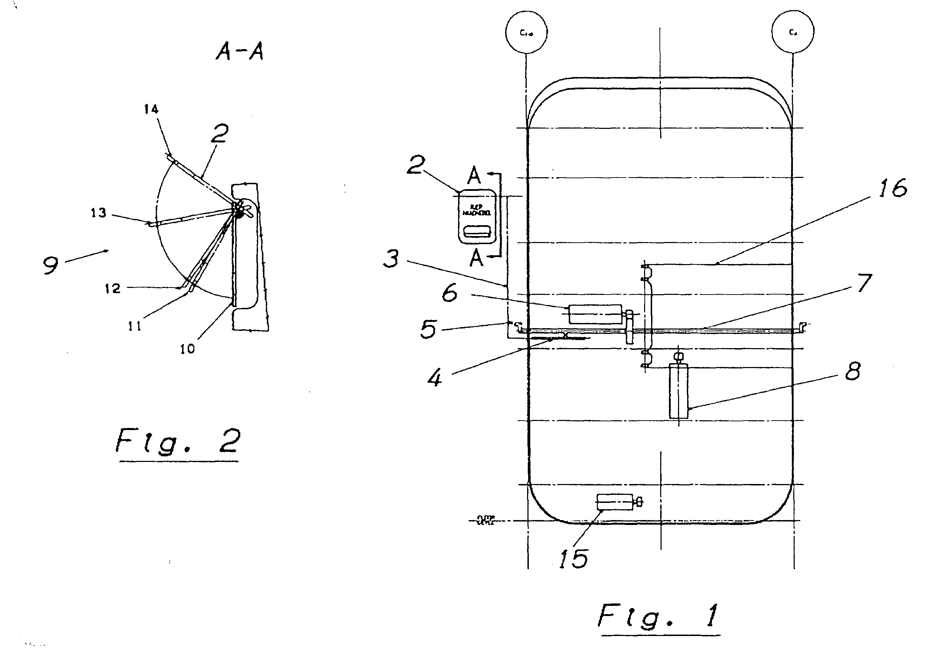

In Fig. 1 ist eine vorzugsweise nach dem Anlageprinzip ausgebildete Passagiertür 1 in geschlossener und verriegelter Position dargestellt. Die Tür 1 ist vom Rumpfinnenraum her betrachtet, wobei die umgebende Rumpfstruktur und die Innenverkleidung der Tür weggelassen sind. Links neben der Tür 1 ist im Innenraum der Kabine ein Türbetätigungshebel 2 angeordnet, vorzugsweise in ergonomisch sinnvoller Höhe. Dieser Türbetätigungshebel 2 ist über ein Gestänge 3 mit der Sicherungswelle 4 verbunden, welche wiederum in mechanischer Wirkverbindung zu der Türverriegelungseinrichtung 5 steht. Diese Einrichtung 5 ist direkt mit der Anhebe- und Verriegelungswelle 7 für die Passagiertür 1 verbunden, welche von einem ersten Eletromotor 6 angetrieben wird. Zum Verschwenken der Tür 1 aus ihrer geschlossenen Position bzw. zum Einschwenken der Tür 1 in die Rumpfstruktur ist neben einem Traglenker 16 für die Tür 1 ein zweiter Elektromotor 8 vorgesehen, dem ebenso wie dem ersten Elektromotor 6 von einer zeichnerisch nicht dargestellten Steuerungs- und Überwachungseinrichtung elektrische Stellsignale zugeführt werden. Die Abgabe der Stellsignale von der Steuerungs- und Überwachungseinrichtung an die beiden Elektromotoren 6 und 8 erfolgt in Abhängigkeit von der Betätigungsstellung des Türbetätigungshebels 2, der auch als elektrischer Schalter 9 für die Steuerungs- und Überwachungseinrichtung ausgebildet ist. Wie aus Fig. 2 zu ersehen ist, weist der Schalter 9 insgesamt fünf Schaltstellungen auf, nämlich die Türverriegelungs- und Sicherungsstellung 10, die Verriegelungs- und Entsicherungsstellung 11, die Schalterstellung 12 "Tür einschwenken, absenken und verriegeln", die Schalterstellung 13 "neutral" und die Schalterstellung 14 "Tür entriegeln, anheben, ausschwenken und in geöffneter Stellung halten". Neben den oben genannten zwei Elektromotoren 6 und 8, die von der Steuerungs- und Überwachungseinrichtung angesteuert werden, ist ein weiterer Elektromotor 15 vorgesehen, der eine nicht gezeigte Notrutschenverriegelung ansteuert.

Die Passagiertür 1 liegt im geschlossenen Zustand mit den zeichnerisch nicht dargestellten türseitigen Anlagebeschlägen von innen gegen die am Rumpf montierten Anlagebeschläge, um so die Übertragung der aus dem Kabineninnendruck resultierenden Kräfte sicher zu stellen. In dieser Position wird die Tür 1 durch die Anhebe- und Verriegelungswelle 7 verriegelt. Nachdem eine Entsicherung der Sicherungswelle 4 erfolgt ist, wird die Anhebe- und Verriegelungswelle 7 zum Entriegeln und Anheben durch den Elektromotor 5 angetrieben. Durch eine Drehung der Welle 7 wird die Tür 1 zunächst entriegelt und dann angehoben, so daß die Anlagebeschläge frei kommen. Nach Abschluß des Anhebevorganges wird die Tür 1 durch den zweiten Eletromotor 8 und mittels eines an der Tür 1 und dem Rumpf mechanisch befestigten Traglenkers 16 parallel zum Rumpf, in Flugrichtung nach außen geschwenkt und in der Endposition gehalten. Für einen Einschwenkvorgang der Tür. 1 erfolgt ein Ablauf der Funktionen in umgekehrter Richtung.

### Bezugszeichenliste

- 1: Passagiertür
- 2: Türbetätigungshebel
- 3: Gestänge
- 4: Sicherungswelle der Türverriegelungseinrichtung 5
- 5: Türverriegelungseinrichtung
- 6: erster Eletromotor
- 7: Anhebe- und Verriegelungswelle der Einrichtung 5
- 8: zweiter Elektromotor
- 9: elektrischer Schalter
- 10: Schalterstellung für Türverriegelung und Türsicherung
- 11: Schalterstellung für Türentsicherung und Türverriegelung
- 12: Schalterstellung "Tür einschwenken, absenken und verriegeln"
- 13: Schalterstellung neutral (keine Türbewegung)
- 14: Schalterstellung "Tür entriegeln, anheben, ausschwenken bzw. in geöffneter Stellung halten (auch nach Loslassen des Hebels)
- 15: Elektromotor für Notrutschenverriegelung
- 16: Traglenker

## Patentansprüche

1. Kinematik für eine Flugzeugtür, die zum Öffnen nach außen geschwenkt und zum Schließen in die Rumpfstruktur eingeschwenkt und dann in eine formschlüssige Position gegenüber der Rumpfstruktur gebracht wird, wobei die Übertragung der aus dem Kabineninnendruck resultierenden Kräfte über Anlagebeschläge oder über Knebel erfolgt und die Tür während des Schwenkvorganges durch einen Traglenker mit einem rumpfnahen und einem türnahen Ende gehalten wird, und wobei zur Durchführung der Funktionen des Entriegelns, Öffnens und Ausschwenkens der Tür sowie für die umgekehrten Funktionen programmsteuerbare Elektromotore vorgesehen sind, dadurch gekennzeichnet,
- daß in der Flugzeugkabine seitlich neben der Tür (1) ein Türbetätigungshebel (2) angeordnet ist, der bei Betätigung eine Sicherungswelle (4) einer Türverriegelungseinrichtung (5) entsichert bzw. sichert (mechanischer Schaltbereich) und der im Anschluß an den mechanischen Verriegelungs-/Entriegelungsvorgang als elektrischer Schalter (9) für eine Steuerungs- und Überwachungseinheit dient, und
- daß die Steuerungs- und Überwachungseinheit nacheinanander elektrische Stellsignale für einen ersten Elektromotor (6) zur mechanischen Entriegelung bzw. Verriegelung der Anhebe- und Verriegelungswelle (7) der Türverriegelungseinrichtung (5) und zum Anheben bzw. Absenken der Tür (1) sowie für einen zweiten Elektromotor (8) bereitstellt, der nach Abschluß des Anhebevorganges die Tür (1) parallel zum Rumpf nach außen schwenkt und in ihrer geöffneten Endposition hält bzw. der zum Schließen der Tür (1) diese in die Rumpfstruktur einschwenkt.

2. Kinematik nach Anspruch 1, dadurch gekennzeichnet, daß die Steuerungs- und Überwachungseinheit neben einer Überwachung und Steuerung aller Türoperationen den jeweiligen Türstatus überwacht.

3. Kinematik nach Anspruch 1 oder 2, dadurch gekennzeichnet, daß von der Steuerungs- und Überwachungseinheit alle die jeweiligen Türoperationen bzw. den jeweiligen Türstatus enthaltenden Informationen an von dem Flugpersonal bedienbare Anzeigegeräte weitergeleitet werden.

4. Kinematik nach Anspruch 1, 2 oder 3, dadurch gekennzeichnet, daß der zweite Elektromoter (8) die Tür in Flugrichtung nach außen schwenkt bzw. entgegen der Flugrichtung in die Rumpfstruktur einschwenkt.

5. Kinematik nach Anspruch 1, 2, 3 oder 4, dadurch gekennzeichnet, daß bei Ausfall des elektrischen Bordnetzes eine reibungslose Funktion der Kinematik durch eine lokale Notstromversorgung sichergestellt ist.
